# EUROPÄISCHE PATENTSCHRIFT

(11) **EP 2 724 977 B1**
(45) Veröffentlichungstag und Bekanntmachung des Hinweises auf die Patenterteilung: **22.11.2017**
(21) Anmeldenummer: 13188321.7
(22) Anmeldetag: 11.10.2013
(51) Int. Cl.: B67B 3/20, H02K 5/128, H02K 21/12

(54) **Verschließer für Behälter**
Capper for containers
Machine de fermeture pour récipients

(30) Priorität: 29.10.2012 DE 102012219757
(43) Veröffentlichungstag der Anmeldung: 30.04.2014
(73) Patentinhaber: Krones AG, 93073 Neutraubling (DE)
(72) Erfinder: Sobiech, Bernd, 93073 Neutraubling (DE)
(74) Vertreter: Grünecker Patent- und Rechtsanwälte PartG mbB

(56) Entgegenhaltungen:
- EP-A2- 2 221 272
- WO-A2-2010/118806
- DE-A1- 10 322 465

## Beschreibung

Die Erfindung betrifft einen Verschließer für Behälter, insbesondere Flaschen, mit einem, in einem Reinraum wirkenden Verschließkopf und mit einem, mindestens einen Rotor und mindestens einen Stator umfassenden Elektromotor.

Schraubverschlüsse von Behältern, wie beispielsweise Flaschen, können bekanntermaßen in Rundläufermaschinen mit mehreren umfänglich angeordneten und um eine gemeinsame Achse rotierenden Verschließern verschlossen werden, wobei die Verschlusskappen jeweils in einem Verschließkopf gehalten und diese nach Aufsetzen auf die jeweilige Behältermündung sowohl gedreht als auch der Gewindesteigung entsprechend abgesenkt werden. Alternativ können auch die Behälter während des Aufdrehens der Verschlusskappe entsprechend angehoben werden. Die Drehbewegung des Verschließkopfs erfolgt dabei mittels eines Elektromotors und die Absenkbewegung entweder durch eine Steuerkurve oder einen Linearmotor.

Nachteilig dabei ist, dass die im Verschließer behandelten Behälter nicht vor Verschmutzungen oder Keimen geschützt sind.

Bei vielen Anwendungen werden deshalb die Behälter in der Abfüllanlage und im Verschließer in einem Reinraum geführt, um einerseits Mittel für die Konservierung, Pasteurisierung, etc. einzusparen und andererseits, um die Behälter mit besonders keimempfindlichen Produkten befüllen zu können. Ebenso können in einem derartigen Reinraum die Behälter und die darin abgefüllten Produkte vor Leckagen der Antriebselemente geschützt werden. Um die Anzahl der Keime und Verschmutzungen im Reinraum weiter abzusenken, werden dabei möglichst viele Komponenten des Verschließers außerhalb des Reinraums angeordnet.

Hierzu offenbart die EP 2 221 272 A2 eine Vorrichtung gemäß dem Oberbegriff des Anspruchs 1 zum Verschließen von Behältnissen mit berührungsloser Drehmomenterzeugung. Hierbei wird eine Rundläufermaschine mit mehreren Verschließern offenbart, wobei jeweils das Drehmoment eines Motors, der Außerhalb eines Reinraums angeordnet ist, mittels einer Magnetkupplung berührungslos auf einen Verschließkopf innerhalb des Reinraums übertragen wird. Die Hubbewegung der Verschließköpfe wird hier über eine Steuerkurve innerhalb des Reinraums bewirkt.

Die WO 2010/118806 offenbart einen Verschließer für Schraubkappen bzw. -verschlüsse, wobei ein Antrieb durch eine Magnetkupplung vom Verschließkopf hermetisch getrennt wird.

Nachteilig dabei ist, dass bei einer Überprüfung des Verschließers entweder der Verschließkopf von innerhalb des Reinraums entnommen werden muss oder dass alternativ dazu zunächst der Elektromotor, ggf. mit Getrieben abgebaut werden muss, damit die Magnetkupplung und der Verschließkopf von oben aus dem Reinraumgehäuse ausgebaut werden können. Dementsprechend ist eine Überprüfung der einzelnen Antriebselemente und der Verschließköpfe zeit- und damit kostenaufwendig.

Die DE 103 22 465 A1 offenbart eine rohrförmige Trennhülse für Magnetkupplungsantriebe oder Spaltrohrmotoren, die zur Vermeidung von Wirbelströmen aus Fasern gewickelt wird.

Aufgabe der vorliegenden Erfindung ist es, einen Verschließer für Behälter, mit einem in einem Reinraum wirkenden Verschließkopf bereitzustellen, bei dem der Antriebsmechanismus und der Verschließkopf zur Überprüfung einfacher ein- und ausgebaut werden können.

Die Erfindung löst diese Aufgabe bei einem Verschließer für Behälter mit den Merkmalen des kennzeichnenden Teils des Anspruchs 1, gemäß dem das Element zur Reinraumtrennung mindestens zwei Einzelelemente umfasst, die über mindestens eine Trennstelle zur Entnahme des Rotors und/oder des Verschließkopfs trennbar sind.

Dadurch, dass zwischen dem Stator und dem Rotor ein Element zur Reinraumtrennung ausgebildet ist, können die Magnetfelder durch das Element zur Reinraumtrennung hindurch auf den Rotor einwirken. Dadurch erfolgt die Kraftübertragung in den Reinraum hinein bereits innerhalb des Elektromotors und das Antriebssystem kann in Folge dessen einfach ohne Magnetkupplung aufgebaut werden. Dadurch, dass das Element zur Reinraumtrennung mindestens zwei Einzelelemente umfasst, die über mindestens eine Trennstelle trennbar sind, kann das Element zur Reinraumtrennung bei einer Überprüfung in die zwei Einzelelemente zerlegt werden. Anschließend kann auf einfache Weise der Rotor und/oder der Verschließkopf von oben aus dem Reinraum entnommen werden.

Der Verschließer kann in einer Getränkeverarbeitungsanlage angeordnet sein.

Die Behälter können insbesondere Kunststoffflaschen, Glasflaschen, Dosen und/oder Tuben umfassen. Die Behälter können dabei Getränke, Lebensmittel, Hygieneartikel, Pasten, chemische, biologische und/oder pharmazeutische Produkte enthalten. Besonders geeignet ist der Verschließer für das Verschließen von PET-Flaschen, die einen Halskragen aufweisen, an welchem sie zumindest während des Befüllens und Verschließens gehalten werden können. Dies ist insbesondere der Fall, wenn mikrobiologisch empfindliche Abfüllprodukte in kaltaseptischen Abfüllanlagen abgefüllt werden. Die Behälter können eine Behältermündung zum Aufschrauben der Behälterverschlüsse umfassen. Denkbar sind ebenso andere Verschlüsse, wie beispielsweise Aufdrückverschlüsse oder Kronkorken.

Die Behälter können im Verschließer in einem Reinraum behandelt werden. Ein Reinraum kann dabei ein keim- oder schmutzpartikelverminderter Bereich sein. Der Reinraum kann einen Überdruck gegenüber der Umgebung aufweisen.

Der Elektromotor kann mit einer Motorsteuerung oder -regelung verbunden sein. Der Elektromotor kann ein bürstenloser Gleichstrom- oder ein Drehstrommotor sein. Der Rotor kann der Anker des Elektromotors und/oder der Läufer eines Linearmotors sein. Der Stator kann eine Anordnung von mehreren Elektromagneten sein, die den Rotor umgeben. Die Elektromagnete können jeweils Spulen sein, die insbesondere um einen ferromagnetischen Kern gewickelt sind. Der Stator kann in Längsrichtung länger ausgebildet sein als der Rotor.

Der Verschließer kann Behälter mit Behälterverschlüssen verschließen, insbesondere mittels des Elektromotors und dem damit verbundenen Verschließkopf, der dazu eine Hubbewegung und/oder eine Drehbewegung ausführt. Der Verschließkopf kann mit einem Greifmechanismus ausgebildet sein, der einen Aufnahmebereich für die Behälterverschlüsse umfasst. Der Verschließer kann eine Aufnahmestation für Behälterverschlüsse umfassen, bei der der Verschließkopf die Behälterverschlüsse aufgreift.

Dass das Element zur Reinraumtrennung mindestens zwei Einzelelemente umfasst, die über mindestens eine Trennstelle trennbar sind, kann bedeuten, dass das Element zur Reinraumtrennung eine Vielzahl von Einzelelementen umfasst, wobei jeweils zwei Einzelelemente an einer Trennstelle voneinander trennbar sind. Beispielsweise könnte das Element zur Reinraumtrennung drei Einzelelemente umfassen, nämlich ein oberes, ein mittleres und ein unteres Einzelelement, wobei das obere und das mittlere Einzelelement über eine erste Trennstelle und das mittlere und das untere Einzelelement über eine zweite Trennstelle trennbar sind. Die Trennstelle kann so ausgebildet sein, dass sie entlang einer in sich geschlossenen Kurve verläuft. Die Trennstelle kann im Querschnitt größer ausgebildet sein, als der Außendurchmesser des Rotors und/oder des Verschließkopfs. Eines der mindestens zwei Einzelelemente kann ein Deckel sein. Der Rotor kann mit einem der mindestens zwei Einzelelemente verbunden sein, insbesondere über eine Lagerung. Der Stator kann mit demselben oder mit einem anderen Einzelelement der mindestens zwei Einzelelemente verbunden sein.

Die Trennstelle kann ein Dichtelement und ein Verbindungselement umfassen. Dadurch kann das Eindringen von Schmutzpartikeln oder Keimen von außen in den Reinraum hinein verhindert werden. Durch das Verbindungselement können die zwei an der Trennstelle verbundenen Einzelelemente besonders stabil miteinander verbunden werden. Mindestens eines der mindestens zwei Einzelelemente kann im Bereich der Trennstelle eine Nut umfassen, in die das Dichtelement eingelegt wird. Das Dichtelement kann ringförmig ausgebildet sein, insbesondere als O-Ring. Das Dichtelement kann aus Gummi, Silikon oder Teflon bestehen. Das Verbindungselement kann einen Flansch, eine Schraube, eine Mutter, ein Rohrgewinde und/oder eine Überwurfmutter umfassen.

Die Trennstelle kann ein Rastmittel umfassen, das dazu ausgebildet ist, eine eindeutige Verbindungslage der zwei Einzelelemente zueinander zu gewährleisten. Dadurch kann ein falscher Zusammenbau der Einzelelemente vermieden werden. Die eindeutige Verbindungslage kann eine einzige relative Position der zwei Einzelelemente zueinander sein, insbesondere eine einzige relative Drehposition. Das Rastmittel kann einen Stift, einen Zapfen, eine Passfeder, eine Nut und/oder ein Durchgangsloch umfassen.

Mindestens zwei der Einzelelemente können aus unterschiedlichen Materialien bestehen. Dadurch können die Einzelelemente besser an unterschiedliche konstruktive Bedingungen angepasst werden. Ein Einzelelement zwischen dem Rotor und dem Stator kann aus einem nichtferromagnetischen Material bestehen, insbesondere aus Kunststoff, und ein anderes Einzelelement aus Metall. Dadurch kann das andere Einzelelement besonders stabil ausgeführt werden, während das Einzelelement aus Kunststoff das Magnetfeld des Stators besonders wenig beeinträchtigt.

Ein Gehäuse des Stators, der Stator und/oder das Element zur Reinraumtrennung kann einen Griff zur Entnahme des Rotors und/oder des Verschließkopfs aus dem Verschließer aufweisen. Dadurch kann ein Benutzer die vorgenannten Bauteile beim Herausnehmen aus dem Verschließer besser greifen.

Das Element zur Reinraumtrennung kann topfförmig ausgebildet sein und einen geschlossenen Endabschnitt, eine Mantelfläche und einen offenen Endabschnitt umfassen, insbesondere wobei die Mantelfläche zylinderförmig ist. Dadurch ergibt sich ein besonders kleiner Spalt zwischen dem Stator und dem Rotor. Gleichzeitig ist dadurch die Konstruktion des Elements zur Reinraumtrennung besonders stabil. Der Rotor kann mit dem geschlossenen Endabschnitt des topfförmigen Elements zur Reinraumtrennung verbunden sein, insbesondere über eine Lagerung. Eine Auswerfstange kann mit dem geschlossenen Endabschnitt verbunden sein und stabförmig auf der Achse des Rotors angeordnet sein. Der Rotor kann an der Auswerfstange gelagert sein. Der offene Endabschnitt kann zum Reinraum hin oder zur Umgebung hin offen ausgebildet sein.

Der Rotor und der Stator können sich entlang der Mantelfläche erstrecken, insbesondere wobei der Rotor innerhalb der Mantelfläche angeordnet ist. Dadurch ergibt sich ein besonders kompakter Aufbau. Der Stator kann außerhalb der Mantelfläche angeordnet sein. Anders ausgedrückt, kann der Stator einen Zylinderring um die Mantelfläche bilden. Der Rotor kann entlang seiner Längsachse kürzer ausgebildet sein als das topfförmige Element zur Reinraumtrennung. Dadurch kann eine Hubbewegung mit dem Rotor innerhalb des topfförmigen Elements zur Reinraumtrennung ausgeführt werden. Der Stator, das topfförmige Element zur Reinraumtrennung, der Rotor und insbesondere die Auswerfstange können konzentrisch ineinander geschachtelt ausgeführt sein.

Die Trennstelle kann sich umlaufend entlang des geschlossenen Endabschnitts oder entlang des offenen Endabschnitts erstrecken. Dadurch, falls sich die Trennstelle umlaufend und entlang des geschlossenen Endabschnitts erstreckt, bildet sich beim Trennen eine Öffnung, durch die der Rotor und der Verschließkopf aus dem Verschließer entnommen werden können. Andernfalls, wenn sich die Trennstelle entlang des offenen Endabschnitts erstreckt, kann der gesamte Elektromotor inklusive des Verschließkopfs aus dem Verschließer entfernt werden und vor Ort oder an einem anderen Ort überprüft und repariert werden. Dadurch ist es auch möglich, dass der Elektromotor zusammen mit dem Verschließer als Ganzes getauscht wird.

Eine erste Trennstelle kann sich umlaufend entlang des geschlossenen Endabschnitts erstrecken und eine zweite Trennstelle kann sich umlaufend entlang des offenen Endabschnitts erstrecken. Dadurch ergibt sich eine besonders flexible Möglichkeit, den Elektromotor zusammen mit dem Verschließer zu überprüfen oder zu reparieren.

Mit dem Anspruch 10 stellt die Erfindung weiterhin eine Abfüllanlage mit einem Verschließer nach wenigstens einem der Ansprüche 1 - 9 bereit. Die Abfüllanlage kann eine Getränkeabfüllanlage sein, insbesondere wobei stromabwärts einer Füllmaschine ein Verschließkarussell zum Verschließen von Behältern angeordnet ist, mit welchem von der Füllmaschine befüllte Behälter verschlossen werden können.

Mit dem Anspruch 11 stellt die Erfindung weiterhin ein Verfahren zum Überprüfen eines Verschließers für Behälter, insbesondere von Flaschen bereit, wobei während eines Normalbetriebs ein Stator eines Elektromotors ein Magnetfeld erzeugt, dass durch eine Reinraumtrennung hindurch zur Bewegung eines Rotors wirkt und der Rotor einen Verschließkopf antreibt, und während eines Revisionsbetriebs des Verschließers der Elektromotor stromlos geschaltet wird und das Element zur Reinraumtrennung an mindestens einer Trennstelle getrennt wird und der Rotor und der Verschließkopf aus dem Verschließer entnommen werden.

Dadurch, dass das Element zur Reinraumtrennung an mindestens einer Trennstelle getrennt wird, ergibt sich ein besonders einfacher Zugang von außerhalb des Reinraums, um sowohl den Elektromotor als auch den Verschließkopf zu entnehmen. Dadurch können bei einem Revisionsbetrieb der Elektromotor, der Verschließkopf und/oder einzelne Baugruppen des Elektromotors bzw. des Verschließkopfs besonders schnell zur Überprüfung entnommen werden. Dadurch können auch besonders schnell die vorgenannten Einheiten ausgetauscht werden.

Das Verfahren kann insbesondere mit einem zuvor beschriebenen Verschließer durchgeführt werden. In diesem Fall kann das Verfahren ein Bereitstellen eines zuvor beschriebenen Verschließers umfassen.

Weitere Merkmale und Vorteile der Erfindung werden nachfolgend anhand der in den Figuren dargestellten Ausführungsbeispiele erläutert. Dabei zeigt:
- Figur 1: eine seitliche Darstellung eines erfindungsgemäßen Verschließers in einer Schnittansicht; und
- Figur 2: eine seitliche Darstellung einer weiteren Ausführungsform eines erfindungsgemäßen Verschließers in einer Schnittansicht.

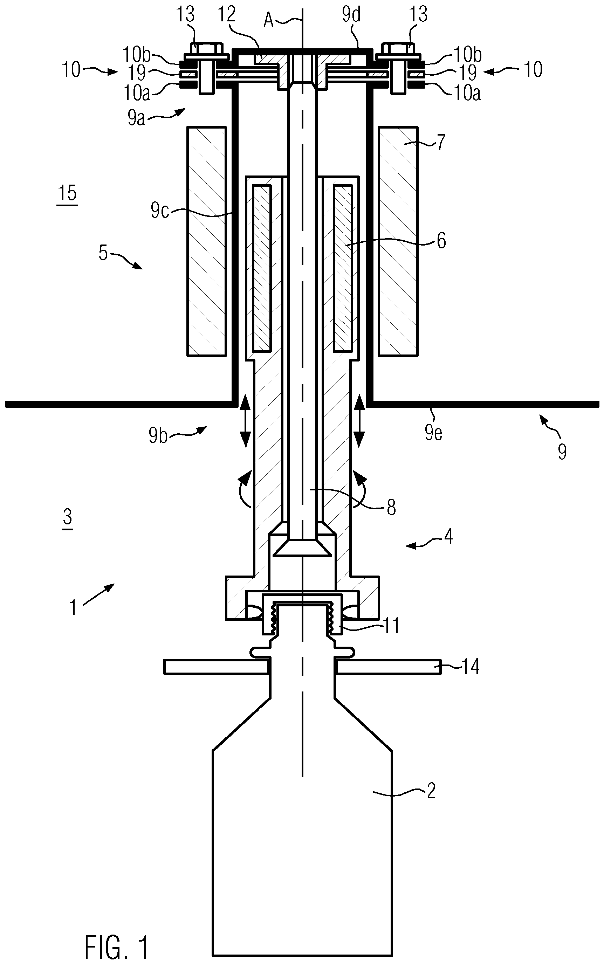

Figur 1 zeigt eine seitliche Darstellung eines erfindungsgemäßen Verschließers 1 in einer Schnittansicht. Zu sehen ist dabei ein Behälter 2 innerhalb eines Reinraums 3, der durch ein Element zur Reinraumtrennung 9 von der Umgebung 3 hermetisch abgeschlossen ist. Auch zu sehen ist ein Elektromotor 5, der einen Verschließkopf 4 derart antreibt, dass dieser eine Hub-und Drehbewegung ausführen kann. Dabei hat der Verschließkopf 4 bereits an einer Aufnahmestation einen Behälterverschluss 11 aufgenommen und diesen durch eine spiralförmige Hub-/Drehbewegung auf den Behälter 2 aufgeschraubt. Dabei wird der Behälter 2 an seinem Hals von der Behälteraufnahme 14 fest gegriffen. Der gesamte Verschließer 1 ist in einem Verschlie-ßerkarussell angeordnet, jedoch kann dieser auch in einem Linearverschließer oder Einzelverschließer angeordnet sein.

Der Elektromotor 5 umfasst dabei einen Stator 7, der gesteuert durch eine Steuereinheit (hier nicht dargestellt) ein Magnetfeld erzeugt, so dass der Rotor 6 sowohl in der Höhe längs der Achse A als auch in einer Drehbewegung um die Achse A herum bewegt werden kann. Dabei befindet sich der Rotor 6 innerhalb des Reinraums 3 und der Stator 7 außerhalb des Reinraums 3 in der Umgebung 15. Zwischen dem Stator 7 und dem Rotor 6 ist das Element zur Reinraumtrennung 9 angeordnet. Hierdurch ergibt sich ein besonders kompakter Aufbau der gesamten Antriebseinheit. Der Stator umfasst dabei mehrere Magnetspulen sowohl in Umfangsrichtung als auch längs der Achse A, um das gewünschte Magnetfeld zu erzeugen. Der Rotor 6 umfasst eine Vielzahl von Permanentmagneten, auf die das Magnetfeld des Stators 7 wirkt.

Der Rotor 6 ist in einer Einheit integral mit dem Verschließkopf 4 ausgebildet und dreh- und verschiebbar an der Auswerfstange 8 gelagert. Die Auswerfstange 8 umfasst dabei ein vergrößertes, unteres Ende, das als mechanischer Anschlag dient, so dass der Verschließkopf 4 bzw. der Rotor 6 nicht nach unten aus dem Verschließer 1 herausfallen können. Gleichzeitig umfasst der Verschließkopf 4 am unteren Ende einen Greifer zur Aufnahme von einem Behälterverschluss 11.

Das Element zur Reinraumtrennung 9 ist topfförmig ausgebildet und umfasst einen geschlossenen Endabschnitt 9a, eine Mantelfläche 9c und einen offenen Endabschnitt 9b. Die Mantelfläche 9c ist dabei zylinderförmig ausgebildet. Der untere Endabschnitt 9b geht dabei in eine ebene Wandfläche 9e über, die im Bereich des Endabschnitts 9b eine kreisförmige Öffnung aufweist. Die Mantelfläche 9c ist rohrförmig ausgebildet und der Stator 7 ist auf deren Außenfläche als Zylinderring angeordnet. Der Rotor 6 bewegt sich innerhalb der Mantelfläche 9c.

Am geschlossenen Endabschnitt 9a ist eine Trennstelle 10, so dass das Element zur Reinraumtrennung 9 in ein erstes Einzelelement 9c, 9e und ein zweites Einzelelement 9d getrennt werden kann. Das erste Einzelelement umfasst dabei die ebene Wandfläche 9e und die zylindrische Wandfläche 9c, wobei diese im Bereich des geschlossenen Endabschnitts 9a einen ersten Flansch 10a aufweist. Das zweite Einzelelement 9d ist als kreisscheibenförmiger Deckel ausgebildet, der an seinem Rand einen zweiten Flansch 10b aufweist.

Der erste Flansch 10a umfasst in Umfangsrichtung eine Vielzahl von Gewindelöchern und der zweite Flansch 10b dazu korrespondierend eine gleiche Anzahl von den Gewindelöchern. Beispielsweise umfasst der erste Flansch 10a sechs Gewindelöcher, die jeweils gleichmäßig beabstandet zueinander auf dem Umfang entlang des Flansches 10a angeordnet sind. Ebenso umfasst der zweite Flansch 10b bei diesem Beispiel sechs in Umfangsrichtung gleichmäßig beabstandete Durchgangsbohrungen. Darüber hinaus ist zwischen dem ersten Flansch 10a und dem zweiten Flansch 10b ein Dichtelement 19 angeordnet, das als Gummidichtung ausgeführt ist. Entsprechend der Gewindelöcher im ersten Flansch 10a umfasst das Dichtelement 19 auch korrespondierende Durchgangslöcher. Zur Verbindung zwischen dem ersten Einzelelement 9c, 9e mit dem zweiten Einzelelement 9d dienen die Verbindungselemente 13, die hier als Schrauben ausgeführt sind, die jeweils durch die Durchgangsbohrungen im zweiten Flansch 10b, dann durch die Durchgangslöcher in dem Dichtelement 19 und schließlich in die Gewindelöcher im ersten Flansch 10a hinein geschraubt werden. Wenn alle Verbindungselemente 13 in den ersten Flansch 10a hinein geschraubt sind, entsteht eine entsprechende Dichtwirkung an der Trennstelle 10 zwischen dem ersten Einzelelement 9c, 9e und dem zweiten Einzelelement 9d.

Bei einer Überprüfung, wie beispielsweise bei einer Reparatur des Verschließers 1, wird nun zunächst der Elektromotor 5 stromlos geschaltet. Dadurch fällt der Rotor 6 mit dem Verschließkopf 4 zusammen nach unten und wird durch die Auswerfstange 8 an einem unteren Anschlagspunkt festgehalten. Die Auswerfstange 8 ist an ihrem oberen Ende über das Halterungselement 12 fest mit dem zweiten Einzelelement 9d (Deckel) verbunden. Anschließend werden die Verbindungselemente 13 (Schrauben) herausgeschraubt und nun kann das zweite Einzelelement 9d zusammen mit der Auswerfstange 8, dem Rotor 6 und dem Verschließkopf 4 nach oben entlang der Achse A herausgezogen werden. Nach erfolgter Überprüfung bzw. Reparatur wird der Verbund aus zweitem Einzelelement 9d, Auswerfstange 8, Rotor 6 und Verschließkopf 4 von oben entlang der Achse A in die Mantelfläche 9c eingeführt und anschließend die beiden Flansche 10a, 10b zusammen mit dem dazwischen liegenden Dichtelement 19 über die Verbindungselemente 13 verschraubt.

Durch die Zugänglichkeit über die Trennstelle 10, sind der Rotor 5 und der Verschließkopf 4 besonders einfach zugänglich und damit kann eine Überprüfung bzw. eine Reparatur besonders schnell und einfach ausgeführt werden.

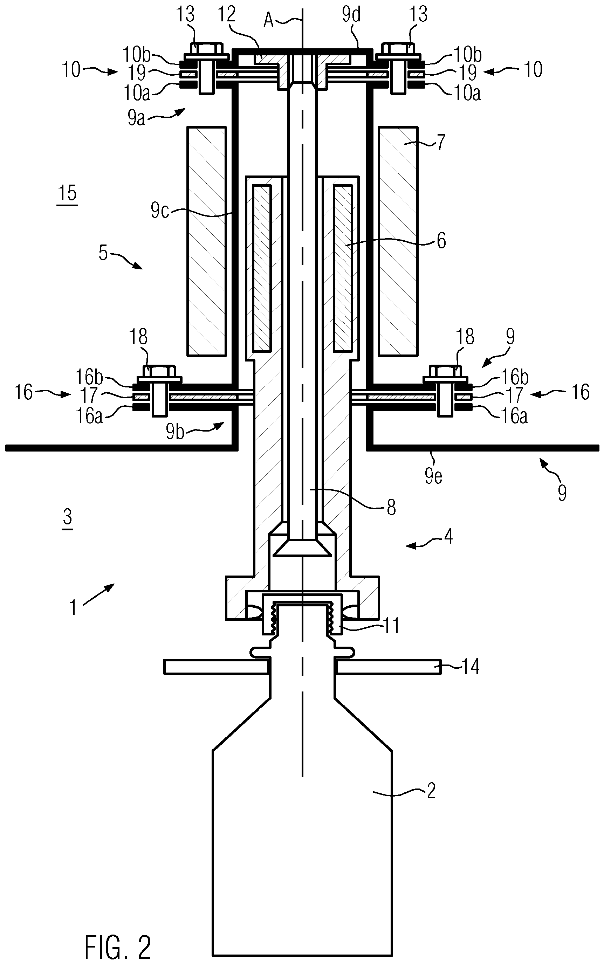

Figur 2 zeigt eine seitliche Darstellung einer weiteren Ausführungsform eines erfindungsgemäßen Verschließers 1 in einer Schnittansicht. Zu sehen ist ein Verschließer 1 mit dem gleichen Aufbau wie der Verschließer der vorangegangenen Ausführungsform in Figur 1, jedoch befindet sich im Bereich des unteren Endabschnitts 9b des Elements zur Reinraumtrennung 9 eine weitere Trennstelle 16, an der das Element zur Reinraumtrennung 9 zusätzlich getrennt werden kann. Bezüglich aller sonstigen Merkmale, Funktionen und Verfahren wird auf die vorangegangen beschriebene Ausführungsform verwiesen, die auch für die Ausführungsform in Figur 2 gilt.

Durch die zusätzliche Trennstelle 16 umfasst das Element zur Reinraumtrennung 9 nun drei Einzelelemente 9c, 9d, 9e und entsprechend ist das erste Einzelelement die Mantelfläche 9c, das zweite Einzelelement der Deckel 9d und das dritte Einzelelement die ebene Wandfläche 9e. Die ebene Wandfläche 9e weist im Bereich ihrer kreisförmigen Öffnung einen dritten Flansch 16a auf. Korrespondierend dazu weist die Mantelfläche 9c an ihrem unteren Ende einen vierten Flansch 16b auf. Der dritte Flansch 16a umfasst dabei ebenfalls entlang des Umfangs gleichmäßig beabstandete Gewindelöcher, hier z. B. sechs Stück und der vierte Flansch 16b weist dazu korrespondierende Durchgangsbohrungen auf. Zwischen dem dritten und dem vierten Flansch 16a, 16b ist zusätzlich ein Dichtelement 17 eingelegt, welches entsprechend korrespondierende Durchgangslöcher hat. Zur Verbindung des dritten Flansches 16a mit dem vierten Flansch 16b dienen die Verbindungselemente 18, die auch hier als Schrauben ausgeführt sind. Durch das Dichtelement 17 zwischen den beiden Flanschen 16a, 16b wird eine Dichtwirkung erzielt, wodurch der Reinraum 3 gegenüber der Umgebung 15 hermetisch abgeschlossen wird. Bei einer Überprüfung des Verschließers 1 wird zunächst der Elektromotor 5, wie im vorangegangenen Ausführungsbeispiel beschrieben, stromlos geschaltet. Dadurch fällt auch hier der Verschließkopf 4 zusammen mit dem Rotor 6 nach unten und wird von der Auswerfstange 8 an einer unteren Anschlagsposition gehalten. Nun kann der Benutzer entscheiden, ob er das Element zur Reinraumtrennung 9 an der ersten Trennstelle 10 oder an der zweiten Trennstelle 16 trennt. Bei einer Trennung an der ersten Trennstelle 10 würde er entsprechend der Figurenbeschreibung zu Fig. 1 vorgehen. Alternativ oder zusätzlich würde er auch bei einer Trennung der zweiten Trennstelle 16 die Verbindungselemente 18 (Schrauben) herausdrehen und dann den Elektromotor 5 als Ganzes zusammen mit dem Verschließkopf 4 nach oben aus dem Verschließer 1 entlang der Achse A herausziehen. Dadurch kann der Elektromotor 5 als Ganzes in einer Reparaturwerkstatt auseinander genommen werden und überprüft bzw. repariert werden. Ebenso kann die gesamte Verschließkopfeinheit bestehend aus dem Elektromotor 5, dem Verschließkopf 4, der Auswerfstange 8, sowie den ersten und zweiten Einzelelementen 9c, 9d als Ganzes ausgetauscht werden.

Durch die vorangegangen beschriebenen Ausführungsbeispiele des Verschließers 1 für Behälter 2 ergibt sich eine besonders einfache Möglichkeit, die Funktion des Verschließers 1 zu überprüfen bzw. diesen zu reparieren. Dadurch kann bei einem Service entsprechend viel Zeit eingespart werden. Bei einem Austausch der gesamten Verschließkopfeinheit ist ein minimaler Stillstand des Verschließers gewährleistet, so dass entsprechend Kosten eingespart werden können.

Es versteht sich, dass in den zuvor beschriebenen Ausführungsbeispielen genannte Merkmale nicht auf diese speziellen Kombinationen beschränkt sind und in beliebigen anderen Kombinationen möglich sind, ohne den durch die nachfolgenden Ansprüche definierten Schutzumfang zu verlassen.

## Patentansprüche

1. Verschließer (1) für Behälter (2), insbesondere Flaschen, mit einem in einem Reinraum (3) wirkenden Verschließkopf (4) und mit einem mindestens einen Rotor (6) und mindestens einen Stator (7) umfassenden Elektromotor (5), und
wobei der Verschließkopf (4) mit dem Rotor (6) verbunden ist und zwischen dem Rotor (6) und dem Stator (7) ein Element zur Reinraumtrennung (9) ausgebildet ist,
**dadurch gekennzeichnet, dass**
das Element zur Reinraumtrennung (9) mindestens zwei Einzelelemente (9c, 9d, 9e) umfasst, die über mindestens eine Trennstelle (10, 16) zur Entnahme des Rotors (6) und/oder des Verschließkopfs (4) trennbar sind.

2. Verschließer (1) für Behälter (2) nach Anspruch 1, wobei die Trennstelle (10, 16) ein Dichtelement (19, 17) und ein Verbindungselement (13, 18) umfasst.

3. Verschließer (1) für Behälter (2) nach Anspruch 1 oder 2, wobei die Trennstelle (10, 16) ein Rastmittel umfasst, das dazu ausgebildet ist, eine eindeutige Verbindungslage der zwei Einzelelemente (9c, 9d, 9e) zueinander zu gewährleisten.

4. Verschließer (1) für Behälter (2) nach wenigstens einem der Ansprüche 1 - 3, wobei mindestens zwei der Einzelelemente (9c, 9d, 9e) aus unterschiedlichen Materialien bestehen.

5. Verschließer (1) für Behälter (2) nach wenigstens einem der Ansprüche 1 - 4, wobei ein Gehäuse des Stators, der Stator (7) und/oder das Element zur Reinraumtrennung (9) einen Griff zur Entnahme des Rotors (6) und/oder des Verschließkopfs (4) aus dem Verschließer (1) umfasst.

6. Verschließer (1) für Behälter (2) nach wenigstens einem der Ansprüche 1 - 5, wobei das Element zur Reinraumtrennung (9) topfförmig ausgebildet ist und einen geschlossenen Endabschnitt (9a), eine Mantelfläche (9c) und einen offenen Endabschnitt (9b) umfasst, insbesondere wobei die Mantelfläche (9c) zylinderförmig ist.

7. Verschließer (1) für Behälter (2) nach Anspruch 6, wobei sich der Rotor (6) und der Stator (7) entlang der Mantelfläche (9c) erstrecken, insbesondere wobei der Rotor (6) innerhalb der Mantelfläche (9c) angeordnet ist.

8. Verschließer (1) für Behälter (2) nach Anspruch 6 oder 7 , wobei sich die Trennstelle (10) umlaufend entlang des geschlossenen Endabschnitts (9a) oder entlang des offenen Endabschnitts (9b) erstreckt.

9. Verschließer (1) für Behälter (2) nach Anspruch 6 oder 7, wobei sich eine erste Trennstelle (10) umlaufend entlang des geschlossenen Endabschnitts (9a) erstreckt und sich eine zweite Trennstelle (16) umlaufend entlang des offenen Endabschnitts (9b) erstreckt.

10. Abfüllanlage mit einem Verschließer (1) nach wenigstens einem der Ansprüche 1 - 9.

11. Verfahren zum Überprüfen eines Verschließers (1) für Behälter (2), insbesondere von Flaschen, wobei während eines Normalbetriebs ein Stator (7) eines Elektromotors (5) ein Magnetfeld erzeugt, das durch eine Reinraumtrennung (9) hindurch zur Bewegung eines Rotors (6) wirkt und der Rotor (6) einen Verschließkopf (4) antreibt, und
während eines Revisionsbetriebs des Verschließers (1) der Elektromotor (5) stromlos geschaltet wird und das Element zur Reinraumtrennung (9) an mindestens einer Trennstelle (10, 16) zur Entnahme des Rotors getrennt wird und der Rotor (6) und der Verschließkopf (4) aus dem Verschließer (1) entnommen werden.

## Claims

1. Capper (1) for containers (2), in particular bottles, comprising a capping head (4) which is operative in a clean room (3), and an electric motor (5) comprising at least one rotor (6) and at least one stator (7), and
wherein the capping head (4) is connected to the rotor (6) and a clean-room separation element (9) is formed between the rotor (6) and the stator (7),
**characterized in that**
the clean-room separation element (9) comprises at least two individual elements (9c, 9d, 9e) that are separable via at least one separation point (10, 16) for removing the rotor (6) and/or the capping head (4).

2. Capper (1) for containers (2) according to claim 1, wherein the separation point (10, 16) comprises a sealing element (19, 17) and a connection element (13, 18).

3. Capper (1) for containers (2) according to claim 1 or 2, wherein the separation point (10, 16) comprises a locking means configured to guarantee a definite connection position of the two individual elements (9c, 9d, 9e) relative to each other.

4. Capper (1) for containers (2) according to at least one of claims 1 to 3, wherein at least two of the individual elements (9c, 9d, 9e) consist of different materials.

5. Capper (1) for containers (2) according to at least one of claims 1 to 4, wherein a housing of the stator, the stator (7) and/or the clean-room separation element (9) comprises a handle for removing the rotor (6) and/or the capping head (4) from the capper (1).

6. Capper (1) for containers (2) according to at least one of claims 1 to 5, wherein the clean-room separation element (9) is configured to be pot-shaped and comprises a closed end section (9a), a lateral surface (9c) and an open end section (9b), particularly wherein the lateral surface (9c) is cylindrical.

7. Capper (1) for containers (2) according to claim 6, wherein the rotor (6) and the stator (7) extend along the lateral surface (9c), particularly wherein the rotor (6) is arranged within the lateral surface (9c).

8. Capper (1) for containers (2) according to claim 6 or 7, wherein the separation point (10) extends circumferentially along the closed end section (9a) or along the open end section (9b).

9. Capper (1) for containers (2) according to claim 6 or 7, wherein a first separation point (10) extends circumferentially along the closed end section (9a) and a second separation point (16) extends circumferentially along the open end section (9b).

10. Filling system comprising a capper (1) according to at least one of claims 1 to 9.

11. Method for checking a capper (1) for containers (2), particularly bottles, wherein during normal operation a stator (7) of an electric motor (5) produces a magnetic field which is operative through a clean room separation (9) for moving a rotor (6), and the rotor (6) drives a capping head (4), and
during overhaul operation of the capper (1) the electric motor (5) is deenergized and the clean-room separation element (9) is separated at at least one separation point (10, 16) for removing the rotor, and the rotor (6) and the capping head (4) are removed from the capper (1).

## Revendications

1. Dispositif de fermeture (1) pour récipients ou contenants (2), notamment des bouteilles, comprenant une tête de fermeture (4) agissant dans une chambre stérile (3) ou en conditions de salle blanche, et comprenant un moteur électrique (5) comportant au moins un rotor (6) et un stator (7), dispositif
dans lequel la tête de fermeture (4) est reliée au rotor (6), et dans lequel entre le rotor (6) et le stator (7) est formé un élément d'isolement de chambre stérile (9),
**caractérisé**
**en ce que** l'élément d'isolement de chambre stérile (9) comprend au moins deux éléments individuels (9c, 9d, 9e), qui peuvent être séparés par l'intermédiaire d'au moins une zone de séparation (10, 16) pour extraire le rotor (6) et/ou la tête de fermeture (4).

2. Dispositif de fermeture (1) pour contenants (2) selon la revendication 1, dans lequel la zone de séparation (10, 16) comprend un élément d'étanchéité (19, 17) et un élément d'assemblage (13, 18).

3. Dispositif de fermeture (1) pour contenants (2) selon la revendication 1 ou la revendication 2, dans lequel la zone de séparation (10, 16) comprend un moyen d'encliquetage, qui est configuré pour garantir une position d'assemblage non ambigüe des deux éléments individuels (9c, 9d, 9e).

4. Dispositif de fermeture (1) pour contenants (2) selon l'une au moins des revendications 1 - 3, dans lequel au moins deux des éléments individuels (9c, 9d, 9e) sont réalisés en des matériaux différents.

5. Dispositif de fermeture (1) pour contenants (2) selon l'une au moins des revendications 1 - 4, dans lequel un carter de stator, le stator (7) et/ou l'élément d'isolement de chambre stérile (9) comprennent une poignée pour prélever le rotor (6) et/ou la tête de fermeture (4) du dispositif de fermeture (1).

6. Dispositif de fermeture (1) pour contenants (2) selon l'une au moins des revendications 1 - 5, dans lequel l'élément d'isolement de chambre stérile (9) est d'une configuration en forme de pot et comprend un tronçon d'extrémité fermé (9a), une surface périphérique (9c) et un tronçon d'extrémité ouvert (9b), et dans lequel notamment la surface périphérique (9c) est de forme cylindrique.

7. Dispositif de fermeture (1) pour contenants (2) selon la revendication 6, dans lequel le rotor (6) et le stator (7) s'étendent le long de la surface périphérique (9c), notamment dans lequel le rotor (6) est agencé à l'intérieur de la surface périphérique (9c).

8. Dispositif de fermeture (1) pour contenants (2) selon la revendication 6 ou la revendication 7, dans lequel la zone de séparation (10) s'étend de manière périphérique le long du tronçon d'extrémité fermé (9a) ou le long du tronçon d'extrémité ouvert (9b).

9. Dispositif de fermeture (1) pour contenants (2) selon la revendication 6 ou la revendication 7, dans lequel la première zone de séparation (10) s'étend de manière périphérique le long du tronçon d'extrémité fermé (9a), et une deuxième zone de séparation (16) s'étend de manière périphérique le long du tronçon d'extrémité ouvert (9b).

10. Installation de conditionnement par remplissage comprenant un dispositif de fermeture (1) selon l'une au moins des revendications 1 - 9.

11. Procédé pour vérifier un dispositif de fermeture (1) pour contenants (2), notamment des bouteilles, d'après lequel pendant un fonctionnement normal, un stator (7) d'un moteur électrique (5) produit un champ magnétique, qui agit à travers un élément d'isolement de chambre stérile (9) en vue d'assurer le mouvement d'un rotor (6), et le rotor (6) entraîne une tête de fermeture (4), et pendant un fonctionnement en mode de révision du dispositif de fermeture (1), le courant est coupé pour le moteur (5), et l'élément d'isolement de chambre stérile (9) est séparé au niveau d'au moins une zone de séparation (10, 16), et le rotor (6) et la tête de fermeture (4) sont extraits du dispositif de fermeture (1).
